# EUROPÄISCHE PATENTSCHRIFT

(11) **EP 0 302 487 B1**
(45) Veröffentlichungstag und Bekanntmachung des Hinweises auf die Patenterteilung: **18.11.1993**
(21) Anmeldenummer: 88112674.2
(22) Anmeldetag: 04.08.1988
(51) Int. Cl.: C08G 65/32, C07C 43/11, C07C 41/16

(54) **Veretherung von Polyoxyalkylenderivaten**
Etherification of polyoxyalkylene derivatives
Ethérification de dérivés de polyoxyalkylènes

(30) Priorität: 06.08.1987 DE 3726121
(43) Veröffentlichungstag der Anmeldung: 08.02.1989
(73) Patentinhaber: BASF Aktiengesellschaft, 67063 Ludwigshafen (DE)
(72) Erfinder: Birnbach, Stefan, Dr., D-6700 Ludwigshafen (DE); Mueller, Josef, Dr., D-6711 Grosskarlbach (DE); Wulz, Klaus, Dr., D-6715 Lambsheim (DE); Houben, Jochen, Dr., D-6700 Ludwigshafen (DE)

(56) Entgegenhaltungen:
- DE-A- 2 059 051
- DE-A- 2 800 710
- DE-C- 261 588
- US-A- 4 587 365
- Organikum, Organisch-Chemisches Grundpraktikum" 9. Auflage, VEB Deutscher Verlag der Wissenschaften, Berlin 1969, S. 222 - 223

## Beschreibung

Die Vorliegende Erfindung betrifft ein neues Verfahren zur Herstellung von veretherten Polyoxyalkylenderivaten durch Umsetzung der entsprechenden freien Hydroxyverbindungen mit Dialkylsulfat in Gegenwart einer wäßrigen Lösung eines Alkalihydroxids.

Es ist bekannt, Polyoxyalkylenverbindungen mit wenigstens einer endständigen Hydroxygruppe zu verethern, indem man zunächst die freie Hydroxyverbindung mit einem Alkalimetall, einem Alkoholat, einem Hydrid oder einen Hydroxid eines Alkalimetales in das entsprechende Alkalialkoholat überführt und dieses dann mit einem Alkylierungsmittel, z.B. mit einem Dialkylsulfat oder mit einem Alkylhalogenid, weiter umsetzt. Dieses Verfahren wind z.B. in DE-A-2059051 beschrieben.

Aus der DE-A-2 800 710 ist weiterhin ein verfahren zur Herstellung von veretherten Polyoxyalkylenverbindungen bekannt, bei dem man die freien Hydroxyverbindungen mit einem organischen Halogenid, z.B. mit Butylchlorid, in Gegenwart einer wäßrigen Lösung von Natrium- oder Kaliumhydroxid, deren Anfangskonzentration an Natrium- oder Kaliumhydroxid wenigstens 30 Gew.%, bezogen auf die wäßrige Lösung, beträgt, bei einer Temperatur, die im allgemeinen im Bereich von 80 bis 100°C liegt, behandelt.

Es hat sich jedoch gezeigt, daß die Veretherungsreaktion unter diesen Reaktionsbedingungen nur in unbefriedigender Weise abläuft.

Aufgabe der vorliegenden Erfindung war es nun, ein neues verfahren bereitzustellen, mittels dessen die Veretherung von Polyoxyalkylenderivaten in einfacher Weise und mit guten Ausbeuten durchgeführt werden kann.

Es wurde gefunden, daß die Herstellung von Polyoxyalkylenderivaten der Formel I 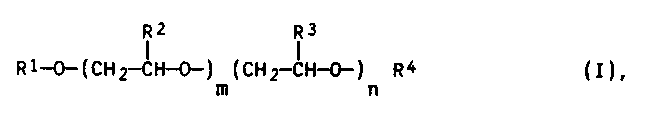
in der
R¹ Wasserstoff, C₁-C₂₀-Alkyl oder C₃-C₅-Alkenyl,
R² und R³ gleich oder verschieden sind und unabhängig voneinander jeweils Wasserstoff, Methyl oder Ethyl,
R⁴ C₁-C₄-Alkyl und
m und n gleich oder verschieden und größer oder gleich 0 sind,
mit der Maßgabe, daß die Summe von m und n 3 bis 300 beträgt, durch Umsetzung von Polyoxyalkylenverbindungen der Formel II 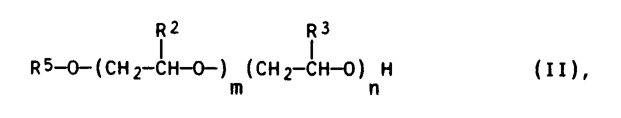
in der R⁵ Wasserstoff, C₁-C₂₀-Alkyl oder C₃-C₅-Alkenyl bedeutet und R², R³, m und n jeweils die obengenannte Bedeutung besitzen, mit einem Dialkylsulfat der Formel III

(R⁴O)₂SO₂ (III),

in der R⁴ die obengenannte Bedeutung besitzt, in Gegenwart von Alkalihydroxid vorteilhaft gelingt, wenn man die Umsetzung bei einer Temperatur von 20 bis 60°C in Gegenwart einer wäßrigen Lösung eines Alkalihydroxids vornimmt, wobei die Konzentration an Alkalihydroxid während der gesamten Dauer der Umsetzung nicht kleiner als 35 Gew.%, bezogen auf die wäßrige Phase sein darf, und man je Moläquivalent organischer Hydroxygruppen mindestens 1 Mol Dialkylsulfat der Formel III und mindestens ein Mol Alkalihydroxid verwendet.

Alle in den oben genannten Formeln I, II und III auftretenden Alkylgruppen können sowohl geradkettig als auch verzweigt sein.

R¹, R⁴ und R⁵ sind beispielsweise Methyl, Ethyl, Propyl, Isopropyl, Butyl, Isobutyl oder sec-Butyl.

R¹ und R⁵ sind weiterhin beispielsweise Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl, 3,5,5,7-Tetramethylnonyl, Isotridecyl, Tetradecyl, Pentadecyl, Hexadecyl, Heptadecyl, Octadecyl, Nonadecyl, Eicosyl, Allyl oder Methallyl (die Bezeichnungen Isooctyl, Isononyl, Isodecyl und Isotridecyl sind Trivialbezeichnungen und stammen von den nach der Oxosynthese erhaltenen Alkoholen - vgl. dazu Ullman, Enzyklopädie der Technischen Chemie, 4. Auflage, Band 7, Seiten 215 bis 217, sowie Band 11, Seiten 435 und 436).

Bevorzugt verwendet man als Ausgangsprodukte Polyoxyalkylenderivate der Formel II, in der R⁵ Wasserstoff oder C₈-C₁₆-Alkyl bedeutet.

Weiterhin bevorzugte Polyoxyalkylenderivate der Formel II sind solche, bei denen die Summe von m und n 3 bis 10 oder 50 bis 100 beträgt.

Als Alkylierungsmittel ist ein Dialkylsulfat der Formel III bevorzugt, in der R⁴ Ethyl oder insbesondere Methyl bedeutet.

Wenn man solche Polyoxyalkylenderivate der Formel II, in der R⁵ Wasserstoff bedeutet, als Ausgangsprodukte verwendet, erfolgt eine zweifache Veretherung. In diesem Falle gelangt man zu veretherten Polyoxyalkylenderivaten der Formel I, in der R¹ identisch ist mit R⁴.

Als Alkalihydroxide, deren wäßrige Lösungen für das neue Verfahren benötigt werden, kommen z.B. Lithiumhydroxide, Natriumhydroxid oder Kaliumhydroxid in Betracht. Die Verwendung von Kalilauge und insbesondere von Natronlauge ist dabei bevorzugt.

Je Moläquivalent organischer Hydroxygruppen im Ausgangsprodukt II verwendet man mindestens 1 Mol, vorzugsweise 1,2 bis 2,5 Mol Dialkylsulfat III und mindestens 1 Mol, vorzugsweise 3 bis 20 Mol Alkalihydroxid.

Die Konzentration an Alkalihydroxid soll erfindungsgemäß während der gesamten Dauer der Umsetzung 35 Gew.%, bezogen auf die wäßrige Phase, nicht unterschreiten. Aus diesem Grunde wählt man vorteilhaft als Reagens eine wäßrige Alkalihydroxidlösung deren Konzentration an Alkalihydroxid ca. 50 Gew.% beträgt.

Weiterhin ist darauf zu achten, daß die Zudosierung der wäßrigen Alkalihydroxidlösung in dem Maße erfolgt, daß die genannte untere Grenze der Alkalihydroxidkonzentration nicht unterschritten wird.

Dazu wird das erfindungsgemäße Verfahren zweckmäßig so durchgeführt, daß man zunächst das zu verethernde Polyoxyalkylenderivat II zusammen mit 20 bis 50 %, vorzugsweise 25 bis 30 %, der wäßrigen Alkalihydroxidlösung, jeweils bezogen auf die für die Umsetzung benötigte Gesamtmenge an wäßriger Alkalihydroxidlösung, vorlegt, und anschließend etwa 25 % der benötigten Gesamtmenge an Dialkylsulfat in einer solchen Geschwindigkeit zudosiert, daß die Temperatur des Reaktionsgemisches 20 bis 60°C, vorzugsweise 30 bis 50°C beträgt. Insbesondere bevorzugt ist dabei der Temperaturbereich von 38 bis 42°C.

Danach wird der verbleibende Teil der wäßrigen Alkalihydroxidlösung, also 50 bis 80 %, vorzugsweise 70 bis 75 %, jeweils bezogen auf die für die Umsetzung benötigte Gesamtmenge an wäßriger Alkalihydroxidlösung, mit etwa 50 % der benötigten Gesamtmenge an Dialkylsulfat zum Reaktionsgemisch gegeben.

Die Zugabe der Komponenten erfolgt dabei gleichzeitig, jedoch räumlich getrennt voneinander. Bei der Zugabe ist darauf zu achten, daß die oben genannte Temperatur des Reaktionsgemischs eingehalten wird.

Schließlich wird nach beendeter Zugabe der genannten Mengen an Dialkylsulfat und wäßriger Alkalihydroxidlösung die verbleibende Dialkylsulfatmenge (ca. 25 %, bezogen auf die benötigte Gesamtmenge) dem Reaktionsgemisch in dem Maße zudosiert, daß auch hier die oben genannte Temperatur beibehalten wird.

Nach beendeter Umsetzung, die im allgemeinen 4 bis 20 Stunden in Anspruch nimmt, wird die resultierende Reaktionsmischung mit Wasser versetzt und auf eine Temperatur von 80 bis 100°C erhitzt. Danach wird die wäßrige Phase abgetrennt und die organische Phase unter vermindertem Druck eingeengt. Kleinere Salzmengen, die dabei unter Umständen auftreten können, werden abfiltriert.

Das erfindungsgemäße Verfahren wird üblicherweise ohne Lösungsmittel durchgeführt. In manchen Fällen kann es aber von Vorteil sein, die Umsetzung in Gegenwart eines inerten organischen Lösungsmittels, z.B. Toluol oder Petrolether, vorzunehmen.

In manchen Fällen kann es auch günstig sein, unter einer Schutzgasatmosphäre, z.B. unter Stickstoff zu arbeiten.

Das neue Verfahren kann sowohl in diskontinuierlicher als auch in kontinuierlicher Arbeitsweise durchgeführt werden.

Mittels des erfindungsgemäßen Verfahrens erhält man einen hohen Veretherungsgrad bei der Umsetzung der Hydroxygruppen enthaltenden Polyoxyalkylenderivate II. Man gelangt dabei außerdem zu farblich sehr hellen Polyoxyalkylenderivaten I. Dies ist entscheidend, denn bei der Anwendung der Polyoxyalkylenderivate I z.B. als nichtionische Tenside, ist die helle Farbe eine wichtige anwendungstechnische Forderung.

Die folgenden Beispiele sollen die Erfindung näher erläutern. Prozentangaben beziehen sich dabei auf das Gewicht.

### Beispiel 1

Man legte 2 kg eines Anlagerungsproduktes von 7 Mol Ethylenoxid und 1 Mol Butylenoxid an 1 Mol eines C₉-C₁₁-Oxoalkoholgemisches, das eine AusgangsOH-Zahl von 98 mg KOH/g aufwies, und 0,6 kg Natronlauge (50 %) in einen mit Stickstoff gespülten Kolben vor. Dazu wurden 0,19 kg Dimethylsulfat bei 35°C unter Stickstoff zugetropft. Anschließend wurden 1,04 kg Natronlauge (50 %) und 0,32 kg Dimethylsulfat gleichzeitig bei 35°C unter Stickstoff zugetropft. Danach wurden 0,12 kg Dimethylsulfat bei 40°C unter Stickstoff zugetropft. Nach einer zweistündigen Nachreaktion bei 40°C wurden 3 l Wasser zugegeben und auf 90°C erhitzt. Nach Abtrennen der wäßrigen Phase wurde die organische Phase unter vermindertem Druck eingeengt und klärfiltriert. Es wurden 2 kg Produkt mit einer Rest-OH-Zahl von 8 mg KOH/g isoliert.

### Beispiel 2

Man legte 1,4 kg eines Anlagerungsproduktes von 6 Mol Ethylenoxid und 4 Mol Propylenoxid an 1 Mol eines C₁₃-C₁₅-Oxoalkoholgemisches, das eine Ausgangs-OH-Zahl von 80 mg KOH/g aufwies, und 0,31 kg Natronlauge (50 %) in einen mit Stickstoff gespülten Kolben vor. Dazu wurden 0,11 kg Dimethylsulfat bei 38°C unter Stickstoff zugetropft. Anschließend wurden 0,63 kg Natronlauge (50 %) und 0,19 kg Dimethylsulfat gleichzeitig bei 38°C unter Stickstoff zugetropft. Danach wurden 0,07 kg Dimethylsulfat bei 38°C unter Stickstoff zugetropft. Nach einer zweistündigen Nachreaktion bei 40°C wurden 2 l Wasser zugegeben und auf 90°C erhitzt. Nach Abtrennen der wäßrigen Phase wurde die organische Phase unter vermindertem Druck eingeengt und klärfiltriert. Es wurden 1,4 kg Produkt mit einer Rest-OH-Zahl von 8 mg KOH/g isoliert.

### Beispiel 3

Man legte in einen mit Stickstoff gespülten Kolben 3 kg eines Polypropylenoxides (Molekulargewicht 4000; Ausgangs-OH-Zahl = 28 mg KOH/g) und 1,2 kg Natronlauge (50 %) vor. Dazu wurden 0,08 kg Dimethylsulfat bei 38°C unter Stickstoff zugetropft. Anschließend wurden 1,2 kg Natronlauge (50 %) und 0,14 kg Dimethylsulfat gleichzeitig bei 38°C unter Stickstoff zugetropft. Danach wurden 0,05 kg Dimethylsulfat bei 38°C unter Stickstoff zugetropft. Nach einer zweistündigen Nachreaktion bei 40°C wurden 3,8 l Wasser zugegeben und auf 90°C erhitzt. Nach Abtrennen der wäßrigen Phase wurde die organische Phase unter vermindertem Druck eingeengt und klärfiltriert. Es wurden 3 kg Produkt mit einer Rest-OH-Zahl von 6 mg KOH/g isoliert.

### Beispiel 4 (Vergleich)

Man verfuhr analog Beispiel 2, jedoch betrug die Reaktionstemperatur 90°C. Es wurde ein Produkt mit einer Rest-OH-Zahl 45,5 mg KOH/g isoliert.

### Beispiel 5 (Vergleich)

Man legte 0,7 kg eines Anlagerungsproduktes von 6 Mol Ethylenoxid und 4 Mol Propylenoxid an 1 Mol eines C₁₃/C₁₅-Oxoalkoholgemisches, das eine Ausgangs-OH-Zahl von 80 mg KOH/g aufwies, und 0,24 kg Natronlauge (50 %) in einen mit Stickstoff gespülten Kolben vor. Dazu wurden bei 40°C 0,21 kg n-Butylbromid zugetropft. Nach einer Nachreaktion von 2 Stunden wurde unter vermindertem Druck bei 40°C überschüssiges Butylbromid abdestilliert. Anschließend wurden 0,5 l Wasser zugegeben, auf 90°C erhitzt und die wäßrige Phase abgetrennt. Die organische Phase wurde unter vermindertem Druck eingeengt und klärfiltriert. Es wurden 0,7 kg Produkt mit einer Rest-OH-Zahl von 59 mg KOH/g isoliert.

### Beispiel 6

Man legte 0,592 kg Dipropylenglykolmonomethylether und 0,624 kg Natronlauge (50 %) vor. Dazu wurden bei 30°C unter Stickstoff 0,222 kg Dimethylsulfat zugetropft. Anschließend wurden 1,248 kg Natronlauge (50 %) und 0,370 kg Dimethylsulfat gleichzeitig bei 33°C unter Stickstoff zugetropft. Danach wurden 0,14 kg Dimethylsulfat bei 37°C zugetropft. Nach einer 90minütigen Nachreaktion wurden 2,5 l Wasser zugegeben und auf 93°C erhitzt. Nach dem Abtrennen der wäßrigen Phase wurde die organische Schicht destilliert. (Die bei einem Druck von 40 mbar im Bereich von 70 bis 76°C siedende Fraktion enthielt das Zielprodukt.) Es wurden 597 g Produkt mit einer Rest-OH-Zahl von 0,5 mg KOH/g isoliert.

### Beispiel 7

Man legte 1,438 kg eines Anlagerungsproduktes von 15 Mol Ethylenoxid und 13 Mol Propylenoxid an 1 Mol Allylalkohol, das eine Ausgangs-OH-Zahl von 39 mg KOH/g aufwies, und 0,16 kg Natronlauge (50 %) in einen mit Stickstoff gespülten Kolben vor. Dazu wurden bei 27°C 0,063 kg Dimethylsulfat unter Stickstoff zugetropft. Anschließend wurden 0,320 kg Natronlauge (50 %) und 0,063 kg Dimethylsulfat gleichzeitig unter Stickstoff bei 28°C zugetropft. Danach wurden 0,0756 kg Dimethylsulfat unter Stickstoff bei 26°C zugetropft. Nach einer einstündigen Nachreaktion bei 40°C wurden 2 l Wasser zugesetzt und auf 90°C erhitzt. Nach Abtrennen der wäßrigen Phase wurde die organische Phase unter vermindertem Druck eingeengt. Es wurden 1,39 kg Produkt mit einer Rest-OH-Zahl von 1,5 mg KOH/g isoliert.

## Patentansprüche

1. Verfahren zur Herstellung von veretherten Polyoxyalkylenderivaten der Formel I 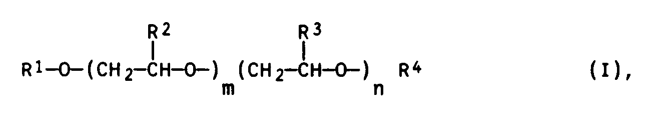 in der
R¹ Wasserstoff, C₁-C₂₀-Alkyl oder C₃-C₅-Alkenyl,
R² und R³ gleich oder verschieden sind und unabhängig voneinander jeweils Wasserstoff, Methyl oder Ethyl,
R⁴ C₁-C₄-Alkyl und
m und n gleich oder verschieden und größer oder gleich 0 sind,
mit der Maßgabe, daß die Summe von m und n 3 bis 300 beträgt, durch Umsetzung von Polyoxyalkylenverbindungen der Formel II 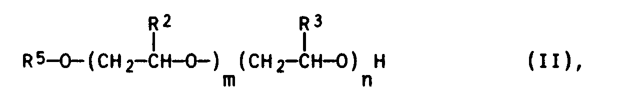 in der R⁵ Wasserstoff, C₁-C₂₀-Alkyl oder C₃-C₅-Alkenyl bedeutet und R², R³, m und n jeweils die obengenannte Bedeutung besitzen, mit einem Dialkylsulfat der Formel III
(R⁴O)₂SO₂ (III),
in der R⁴ die obengenannte Bedeutung besitzt, in Gegenwart von Alkalihydroxid, dadurch gekennzeichnet, daß man die Umsetzung bei einer Temperatur von 20 bis 60°C in Gegenwart einer wäßrigen Lösung eines Alkalihydroxids vornimmt, wobei die Konzentration an Alkalihydroxid während der gesamten Dauer der Umsetzung nicht kleiner als 35 Gew.%, bezogen auf die wäßrige Phase, sein darf, und man je Moläquivalent organischer Hydroxygruppen mindestens 1 Mol Dialkylsulfat der Formel III und mindestens ein Mol Alkalihydroxid verwendet.

2. Verfahren gemäß Anspruch 1, dadurch gekennzeichnet, daß R⁵ Wasserstoff oder C₈-C₁₆-Alkyl bedeutet.

3. Verfahren gemäß Anspruch 1, dadurch gekennzeichnet, daß man ein Dialkylsulfat der Formel III verwendet, in der R⁴ Methyl oder Ethyl bedeutet.

## Claims

1. A process for the preparation of an etherified polyoxyalkylene derivative of the formula I 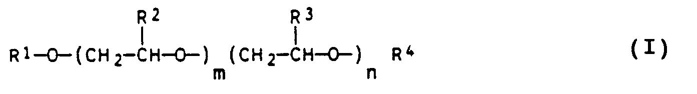 where R¹ is hydrogen, C₁-C₂₀-alkyl or C₃-C₅-alkenyl, R² and R³ are identical or different and independently of one another are each hydrogen, methyl or ethyl, R⁴ is C₁-C₄-alkyl and m and n are identical or different and are each greater than or equal to 0, with the proviso that the sum of m and n is from 3 to 300, by reacting a polyoxyalkylene compound of the formula II 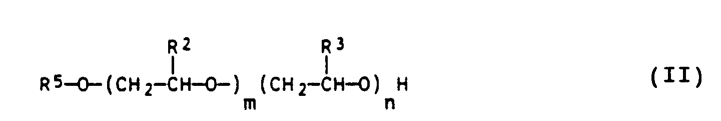 where R⁵ is hydrogen, C₁-C₂₀-alkyl or C₃-C₅-alkenyl and R², R³, m and n each have the above meanings, with a dialkyl sulfate of the formula III
(R⁴O)₂SO₂ (III)
where R⁴ has the above meanings, in the presence of an alkali metal hydroxide, wherein the reaction is carried out at from 20 to 60°C in the presence of an aqueous solution of an alkali metal hydroxide, the concentration of alkali metal hydroxide during the entire duration of the reaction being not less than 35% by weight, based on the aqueous phase, and not less than 1 mole of dialkyl sulfate of the formula III and not less than one mole of alkali metal hydroxide are used per mole equivalent of organic hydroxyl groups.

2. A process as claimed in claim 1, wherein R⁵ is hydrogen or C₈-C₁₆-alkyl.

3. A process as claimed in claim 1, wherein a dialkyl sulfate of the formula III, where R⁴ is methyl or ethyl, is used.

## Revendications

1. Procédé de préparation de dérivée de polyoxyalkylène éthérifiés de formule I 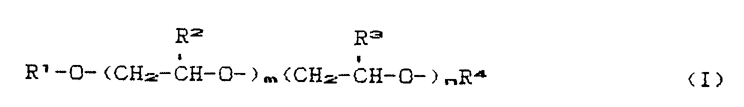 dans laquelle
R¹ représente un atome d'hydrogène ou un reste alkyle en C₁-C₂₀ ou alcényle en C₃-C₅,
R² et R³ sont identiques ou différents et représentent chacun, indépendamment l'un de l'autre, un atome d'hydrogène ou un reste méthyle ou éthyle,
R⁴ représente un reste alkyle en C₁-C₄ et
m et n sont identiques ou différents et supérieurs ou égaux à 0, étant spécifié que la somme de m et n est comprise entre 3 et 300,
par réaction de polyoxyalkylènes de formule II 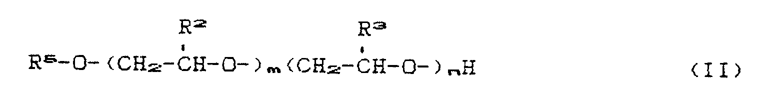 dans laquelle
R⁵ représente un atome d'hydrogène ou un reste alkyle en C₁-C₂₀ ou alcényle en C₃-C₅ et
R², R³, m et n ont chacun la signification donnée ci-dessus,
avec un sulfate de dialkyle de formule III
(R⁴O)₂SO₂ (III)
dans laquelle R⁴ a la signification donnée ci-dessus, en présence d'hydroxyde alcalin, caractérisé en ce qu'on conduit la réaction à une température de 20 à 60°C en présence d'une solution aqueuse d'un hydroxyde alcalin, la concentration d'hydroxyde alcalin pendant toute la durée de la réaction ne devant pas être inférieure à 35% en poids par rapport à la phase aqueuse, et en ce qu'on utilise, par équivalent molaire de groupements hydroxy organiques, au moins 1 mole de sulfate de dialkyle de formule III et au moins 1 mole d'hydroxyde alcalin.

2. Procédé selon la revendication 1, caractérisé en ce que R⁵ représente un atome d'hydrogène ou un reste alkyle en C₈-C₁₆.

3. Procédé selon la revendication 1, caractérisé en ce qu'on utilise un sulfate de dialkyle de formule III dans lequel R⁴ représente un reste méthyle ou éthyle.
